# EUROPÄISCHE PATENTSCHRIFT

(11) **EP 3 003 977 B1**
(45) Veröffentlichungstag und Bekanntmachung des Hinweises auf die Patenterteilung: **19.06.2019**
(21) Anmeldenummer: 14729611.5
(22) Anmeldetag: 21.05.2014
(51) Int. Cl.: C01B 33/24, C04B 22/00, C04B 28/04, C04B 40/00, C04B 103/12, C04B 103/14

(54) **BESCHLEUNIGER FÜR MINERALISCHE BINDEMITTEL**
ACCELERANT FOR MINERAL BINDER
ACCÉLÉRATEUR POUR LIANT MINÉRAL

(30) Priorität: 30.05.2013 EP 13169868
(43) Veröffentlichungstag der Anmeldung: 13.04.2016
(60) Teilanmeldung: 19171619.0
(73) Patentinhaber: Sika Technology AG, 6340 Baar (CH)
(72) Erfinder: MÄDER, Gilbert, CH-8460 Marthalen (CH); KURZ, Christophe, CH-5304 Endingen (CH); MARAZZANI, Beat, CH-8102 Oberengstringen (CH); BÜRGE, Christian, CH-5503 Schafisheim (CH)
(74) Vertreter: Sika Patent Attorneys
(86) Internationale Anmeldenummer: PCT/EP2014/060412
(87) Internationale Veröffentlichungsnummer: WO 2014/191272

(56) Entgegenhaltungen:
- EP-A1- 2 607 329
- DE-U1-202009 017 741
- GB-A- 891 170
- GB-A- 1 467 717

## Beschreibung

### Technisches Gebiet

Die Erfindung betrifft einen Abbinde- und Erhärtungsbeschleuniger für mineralische Bindemittel sowie ein Verfahren zu dessen Herstellung wobei eine Calciumverbindung mit einem Silica-Sol umgesetzt wird. Zudem bezieht sich die Erfindung auf die Verwendung des Abbinde- und Erhärtungsbeschleuniger zur Beschleunigung des Abbindens und Erhärtens von mineralischen Bindemitteln sowie eine Bindemittelzusammensetzung enthaltend den Abbinde- und Erhärtungsbeschleuniger.

### Stand der Technik

Bei Beton- oder Stahlbetonfertigteilen oder bei Fahrbahn- oder Pistensanierungen wird vermehrt eine hohe Frühfestigkeit gefordert, damit die Fertigteile bereits nach wenigen Stunden entschalt, transportiert, gestapelt oder vorgespannt werden können oder die Fahrbahnen oder Pisten befahren werden können. Um diese Zielsetzung in der Praxis zu erreichen, werden neben leistungsfähigen Betonrezepturen, wie niedriger w/z-Wert oder hoher Zementgehalt, oftmals auch Wärme- oder Dampfbehandlungen angewendet. Diese Behandlungen brauchen viel Energie, so dass aufgrund steigender Energiepreise, erheblicher Investitionskosten und Dauerhaftigkeits- sowie Sichtbetonproblemen zunehmend von dieser Behandlung abgesehen wird und nach anderen Wegen zur Beschleunigung des Erhärtungsprozesses gesucht wird.

Beschleunigende Zusätze stellen bislang keine befriedigende Alternative zur Wärme- oder Dampfbehandlung dar. Es sind zwar Substanzen bekannt, welche das Abbinden und Erhärten von Beton beschleunigen, enthaltend Calciumverbindungen umgesetzt mit ausgewählten Siliciumdioxidverbindungen. So beschreibt beispielsweise DE202009017741 die Verwendung eines beschleunigenden Zusatzes enthaltend Calciumverbindungen umgesetzt mit pyrogener Kieselsäure oder gefällter Kieselsäure. Solche beschleunigenden Zusätze haben jedoch den Nachteil, dass sie zu einer unbefriedigenden Druckfestigkeit des erhärteten Betons führen.

Zudem weisen solche beschleunigenden Zusätze oftmals eine beschränkte Stabilität auf und wirken sich negativ auf die Verarbeitbarkeit von hydraulischen Bindemitteln bzw. daraus hergestelltem Mörtel oder Beton aus.

### Darstellung der Erfindung

Aufgabe der vorliegenden Erfindung ist es daher, beschleunigende Zusätze sowie Verfahren zu deren Herstellung zur Verfügung zu stellen, welche die oben genannten Nachteile nicht aufweisen.

Die beschleunigenden Zusätze sollen nebst einer möglichst effektiven Erhöhung der Druckfestigkeit, speziell der Frühdruckfestigkeit nach 8 Stunden, von mineralischen Bindemittelzusammensetzungen über möglichst lange Zeit lagerstabil sein. Zudem sollen die Zusätze die Verarbeitbarkeit der hydraulischen Bindemittelzusammensetzungen möglichst wenig beeinträchtigen.

Überraschenderweise wurde gefunden, dass dies durch das Verfahren zur Herstellung eines Abbinde- und Erhärtungsbeschleunigers für mineralische Bindemittel gemäss Anspruch 1 erreicht werden kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt umfasst die vorliegende Erfindung ein Verfahren zur Herstellung eines Abbinde- und Erhärtungsbeschleunigers, nachfolgend auch Beschleuniger genannt, für mineralische Bindemittel aufweisend einen Schritt:
(i) der Umsetzung einer Calciumverbindung **CV** mit Silica-Sol **SL,** wobei während der Umsetzung das molare Verhältnis von Si:Ca im Bereich von 0.03-0.06 liegt, und wobei die Umsetzung der Calciumverbindung **CV** mit dem Silica-Sol **SL** in Schritt (i) in Gegenwart eines Lösungsmittels stattfindet.

Die Calciumverbindung und das Silica-Sol sind lediglich der besseren Lesbarkeit halber mit **CV** bzw. **SL** bezeichnet. Die Bezeichnungen sind in keiner Weise einschränkend zu verstehen.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (z.B. Gips oder Weisskalk) sein.

Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 50 Gew.-%, im Speziellen wenigstens 75 Gew.-%, Zement verstanden.

Insbesondere enthält das mineralische Bindemittel oder die Bindemittelzusammensetzung ein hydraulisches Bindemittel, bevorzugt Zement. Besonders bevorzugt ist Portlandzement, insbesondere vom Typ CEM I, II, III oder IV (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 50 Gew.-%, im Speziellen wenigstens 75 Gew.-%. Gemäss einer weiteren vorteilhaften Ausführungsform umfasst das mineralische Bindemittel wenigstens 95 Gew.-% hydraulisches Bindemittel, insbesondere Zement.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 20 - 50 Gew.-%, latenthydraulische und/oder puzzolanische Bindemittel.

Unter "Frühdruckfestigkeit" wird im vorliegenden Zusammenhang insbesondere eine Druckfestigkeit nach 8 Stunden verstanden. Die Druckfestigkeiten sind insbesondere entsprechend der Norm EN 12390-3 definiert.

Die Calciumverbindung **CV** ist typischerweise ausgewählt ist aus der Gruppe bestehend aus Calciumchlorid, Calciumnitrat, Calciumformiat, Calciumacetat, Calciumbicarbonat, Calciumbromid, Calciumcitrat, Calciumchlorat, Calciumhydroxid, Calciumoxid, Calciumhypochlorid, Calciumiodate, Calciumiodid, Calciumlactat, Calciumnitrit, Calciumphosphat, Calciumpropionat, Calciumsulphat, Calciumsulphat-hemihydrat, Calciumsulphate-dihydrat, Calciumsulphid, Calciumtartrat, Calciumgluconat, Calciumsulfamat, Calciumthiocyanat, Calciummaleinat, Calciumfumarat, Calciumadipat und Calciumaluminat. Vorzugsweise ist die Calciumverbindung **CV** ausgewählt ist aus der Gruppe bestehend aus Calciumnitrat und Calciumsulfamat.

Weiter kann es vorteilhaft sein, wenn es sich bei der Calciumverbindung **CV** um Calciumnitrat handelt, dies ist insbesondere für eine hohe Druckfestigkeit, insbesondere für eine hohe Druckfestigkeit nach 8 h, in hydraulischen Bindemitteln vorteilhaft.

Weiter kann es vorteilhaft sein, wenn es sich bei der Calciumverbindung **CV** um Calciumsulfamat handelt, dies ist insbesondere für ein hohes Ausbreitmass, insbesondere für ein hohes Ausbreitmass nach 1 min, in hydraulischen Bindemitteln vorteilhaft.

Unter dem Begriff "Silica-Sol", auch Kieselsol oder Kieselsäure-Sol genannt, wird im vorliegenden Dokument eine wässrige Lösung von annähernd kugelförmigen, kolloidal gelösten Polykieselsäure-Molekülen mit 1 - 60 Gew.-% SiO₂ Gehalt, die sich jahrelang unverändert lagern lassen. Je nach Teilchengröße der Partikel ist Silica-Sol milchig-trüb bis farblos- klar.

Insbesondere handelt es sich bei dem Silica-Sol **SL** um ein Silica-Sol mit einem durchschnittlichen Partikeldurchmesser von 1-150nm, insbesondere von 1 - 50 nm, bevorzugt 1.2 - 25 nm, im Speziellen 1.3 - 20 nm, ganz besonders bevorzugt 2 - 9 nm oder 2.2 - 6 nm.

Der durchschnittliche Partikeldurchmesser kann durch Dynamische Lichtstreuung (DLS), insbesondere durch Photonenkreuzkorrelationsspektroskopie (PCCS), bevorzugt mit einem Gerät vom Typ NANOPHOX der Firma Sympatec GmbH (Deutschland), bestimmt. Unter dem durchschnittlichen Partikeldurchmesser wird vorliegend insbesondere der d₅₀-Wert verstanden.

Die Herstellung des Silica-Sols erfolgt beispielsweise durch Behandeln wässriger Alkalisilicat-Lösungen, auch Wasserglas genannt, mit Ionenaustauschern und Stabilisierung durch wenig Alkali.

Unter dem Begriff "Wasserglas" werden im vorliegenden Dokument aus dem Schmelzfluss erstarrte wasserlösliche Salze von Kieselsäuren, insbesondere Kalium- und Natriumsilicate oder deren wässrige Lösungen verstanden, wie sie beschreiben sind in CD Römpp Chemie Lexikon, Version 1.0, Georg Thieme Verlag, Stuttgart 1995.

Von Silica-Sol zu unterscheiden ist beispielsweise pyrogene Kieselsäure, worunter hochdisperse Kieselsäuren zusammengefasst werden, die durch Flammenhydrolyse hergestellt werden. Dabei wird Siliciumtetrachlorid in einer Knallgas-Flamme zersetzt.

Weiter von Silica-Sol zu unterscheiden ist beispielsweise gefällte Kieselsäure. Sie werden aus einer wässrigen Alkalisilicat-Lösung durch Fällung mit Mineralsäuren hergestellt. Dabei bilden sich kolloidale Primärteilchen, die mit fortschreitender Reaktion agglomerieren und schliesslich zu Aggregaten verwachsen.

Vorzugsweise weist das Silica-Sol SL einen pH von 3 - 12, insbesondere von 7 - 12, besonders bevorzugt von 10 - 11, auf. Dies ist dahingehend von Vorteil, weil daraus in hydraulischen Bindemitteln sowohl eine hohe Druckfestigkeit, insbesondere eine hohe Druckfestigkeit nach 8 h, als auch ein hohes Ausbreitmass, insbesondere ein hohes Ausbreitmass nach 1 min, bei zugleich guter Stabilität des Beschleunigers resultiert.

Weist das Silica-Sol SL einen pH von 7 - 9 auf, ist dies der Erreichung einer besonders hohen Druckfestigkeit in hydraulischen Bindemitteln zuträglich.

Weist das Silica-Sol **SL** einen pH von 3 - 5 auf, ist dies der Erreichung eines vorteilhaften Ausbreitmasses in hydraulischen Bindemitteln zuträglich.

Wird ein Silica-Sol **SL** mit einem pH im Bereich von 7 - 12, besonders bevorzugt von 10 - 11 verwendet, ergeben sich besonders vorteilhafte Druckfestigkeiten und Verarbeitungseigenschaften von hydraulischen Zusammensetzungen. Zugleich wird eine besonders gute Stabilität des Beschleunigers erreicht.

Das Silica-Sol **SL** ist bevorzugt eine wässrige Lösung oder Suspension mit einem Gehalt an SiO₂ im Bereich von 3 - 30 Gew.-%, insbesondere 4 - 20 Gew.-%, insbesondere bevorzugt 10 - 18 Gew.-%.

Die Umsetzung der Calciumverbindung **CV** mit dem Silica-Sol **SL** in Schritt (i) findet in Gegenwart eines Lösungsmittels statt. Geeignete Lösungsmittel sind beispielsweise Wasser, Alkohole und/oder Polyalkohole, insbesondere Glykol, Glyzerin, Ethanol oder Isopropanol. Wasser ist dabei das am meisten bevorzugte Lösungsmittel.

Insbesondere wird vor der Umsetzung in Schritt (i) die Calciumverbindung **CV** in Form einer die Calciumverbindung **CV** enthaltenden Lösung, insbesondere einer wässrigen die Calciumverbindung **CV** enthaltenden Lösung, vorgelegt. Die die Calciumverbindung **CV** enthaltende Lösung enthält dabei die Calciumverbindung **CV,** ein Lösungsmittel sowie optional weitere Substanzen. Als Lösungsmittel wird insbesondere Wasser verwendet. Eine Konzentration der Calciumverbindung **CV** in der Calciumlösung liegt mit Vorteil im Bereich von 5 - 80 Gew.-%, insbesondere 30 - 70 Gew.-%, weiter bevorzugt 40 - 60 Gew.-%.

Insbesondere verfügt die Calciumverbindung **CV** oder die Calciumlösung über einen pH von 2 - 10, bevorzugt 3 - 9, besonders bevorzugt 4 - 8, im Besonderen 5 - 7. Im Speziellen ist der pH der Calciumverbindung **CV** oder der Calciumlösung < 7.

Insbesondere findet daher in Schritt (i) die Umsetzung der Calciumverbindung **CV** mit dem Silica-Sol **SL** in Gegenwart von Wasser, insbesondere in wässriger Lösung, statt. Die Umsetzung in Schritt (i) umfasst insbesondere eine Fällungsreaktion zwischen der Calciumverbindung **CV** und dem Silica-Sol **SL.** Die Calciumverbindung **CV** wird mit dem Silica-Sol **SL** insbesondere zu einer Calciumsilikat-Hydrat-Suspension umgesetzt.

Ein Anteil an Lösungsmittel, insbesondere Wasser, während der Umsetzung in Schritt (i) beträgt bevorzugt 25 - 95 Gew.-%, insbesondere 30 - 60 Gew.-%, insbesondere 35 - 50 Gew.-%, bezogen auf das Gewicht der gesamten Reaktionsmischung.

Weiter ist es von Vorteil, wenn die Calciumverbindung **CV** und das Silica-Sol **SL** getrennt voneinander in Form von wässrigen Lösungen oder Suspensionen vorgelegt werden.

Die Umsetzung in Schritt (i) findet vorzugsweise in einem Flüssigphasen-Reaktor ausgewählt aus der Gruppe bestehend aus Sulzermixer Reaktor, Reaktor mit externer Rezirkulation, Kaskadenreaktor, Loop Reaktor, Rühr-Reaktor und Reaktor mit Rotor-Stator-Mischer statt. Bevorzugte Flüssigphasen-Reaktoren sind insbesondere Rühr-Reaktoren, Statikmischer und Reaktoren mit Rotor-Stator-Mischer.

Die Umsetzung der Calciumverbindung **CV** mit der Siliziumverbindung **SV** oder Schritt (i) des Verfahrens erfolgt insbesondere bei einem pH von 2 - 12, insbesondere 2 - 8, bevorzugt 2.5 - 7, speziell 3 - 6.5, besonders bevorzugt 3 - 4.

Besonders bevorzugt erfolgt die Umsetzung der Calciumverbindung **CV** mit der Siliziumverbindung **SV** oder Schritt (i) des Verfahrens unter sauren Bedingungen. Vorteilhaft ist ein pH < 7, insbesondere < 6, bevorzugt < 5 oder < 4.

Falls erforderlich, kann der pH vor und/oder während der Umsetzung der Calciumverbindung **CV** mit der Siliziumverbindung **SV** oder Schritt (i) durch Zugabe einer Säure und/oder Base auf den gewünschten Wert, insbesondere einen vorstehend genannten Wert, eingestellt werden.

Gemäss einer vorteilhaften Ausführungsform wird vor und/oder während Schritt (i) der pH durch Zugabe einer Säure eingestellt. Die Säure ist insbesondere eine organische Säure, bevorzugt eine Carbonsäure, insbesondere eine C₁ - C₄ Carbonsäure, bevorzugt Essigsäure und/oder Ameisensäure. Speziell bevorzugt ist Ameisensäure.

Bevorzugt erfolgt die Umsetzung der Calciumverbindung **CV** mit der Siliziumverbindung **SV** oder Schritt (i) des Verfahrens in Abwesenheit eines hydraulischen Bindemittels und/oder in Abwesenheit eines zementösen Bindemittels und/oder in Abwesenheit von Zement. Dies bedeutet insbesondere, dass ein Anteil derartiger Stoffe während der Umsetzung < 10 Gew.-%, bevorzugt < 5 Gew.-%, speziell < 1 Gew.-%, besonders bevorzugt < 0.5 Gew.-% oder < 0.1 Gew.-% ist. Im Speziellen liegen gar keine solche Stoffe während der Umsetzung vor.

Eine allfällige Vermischung mit derartigen Stoffen erfolgt insbesondere erst bei Verwendung des hergestellten Abbinde- und Erhärtungsbeschleunigers, welche insbesondere zeitlich verzögert und/oder räumlich getrennt von der Herstellung des Abbinde- und Erhärtungsbeschleunigers erfolgt.

Während der Umsetzung in Schritt (i) kann weiter eine Verbindung ausgewählt aus der Gruppe bestehend aus Aluminiumsalz, Aluminiumhydroxid, Aluminiumoxid, Magnesiumsalz, Magnesiumhydroxid und Magnesiumoxid, zugegeben werden, insbesondere sind diese Salze ausgewählt aus der Gruppe bestehend aus Nitraten, Nitriten und/oder Sulfonaten.

Es kann weiter vorteilhaft sein, wenn das Verfahren weiter einen Schritt (ii) der Zugabe wenigstens einer weiteren erhärtungsbeschleunigenden Substanz beinhaltet. Die wenigstens eine weitere erhärtungsbeschleunigende Substanz umfasst dabei bevorzugt ein oder mehrere Aminoalkohole, ein oder mehrere α-Hydroxycarbonsäuren, ein oder mehrere Alkali- und/oder Erdalkalithiocyanate, ein oder mehrere Alkali- und/oder Erdalkalihalogenide, Glyzerin und/oder Glyzerinderivate.

Die wenigstens eine weitere erhärtungsbeschleunigende Substanz umfasst mit Vorteil einen Aminoalkohol, insbesondere N-Methyldiethanolamin, und/oder eine schwefelhaltige Verbindung, insbesondere ein oder mehrere Alkali- und/oder Erdalkalithiocyanate, bevorzugt NaSCN.

Ein Anteil aller weiteren erhärtungsbeschleunigenden Substanzen zusammen beträgt insbesondere 1 - 20 Gew.-%, vorzugsweise 3 - 18 Gew.-% .-%, bezogen auf das Gesamtgewicht des Abbinde- und Erhärtungsbeschleunigers.

Im Speziellen wird ein Aminoalkohol als wenigstens eine erhärtungsbeschleunigende Substanz mit einem Anteil von 1 - 10 Gew.-%, vorzugsweise 2 - 8 Gew.-%, insbesondere bevorzugt 4 - 8 Gew.-%, bezogen auf das Gesamtgewicht des Abbinde- und Erhärtungsbeschleunigers, eingesetzt. Der Aminoalkohol ist insbesondere ausgewählt aus Diethanolamin, N-Methyldiethanolamin, N-Methyldiisopropanolamin, N,N,N',N'-Tetrakis-(hydroxypropyl)-ethylendiamin, Tris-(hydroxymethyl)-aminomethan. Besonders bevorzugt sind Diethanolamin und/oder N-Methyldiethanolamin. Ganz besonders bevorzugt ist N-Methyldiethanolamin. Bevorzugt ist N-Methyldiethanolamin. Überraschenderweise wurde gefunden, dass sich Aminoalkohle vorteilhaft auf die Druckfestigkeit nach 8 Stunden auswirken und zugleich die Lagerstabilität des Abbinde- und Erhärtungsbeschleunigers verbessert werden kann.

Ebenfalls vorteilhaft ist die Verwendung einer schwefelhaltigen Verbindung, insbesondere eines Alkali- und/oder Erdalkalithiocyanats, mit einem Anteil von 1 - 20 Gew.-%, vorzugsweise 5 - 15 Gew.-%, insbesondere bevorzugt 8 - 12 Gew.-%, bezogen auf das Gesamtgewicht des Abbinde- und Erhärtungsbeschleunigers. Besonders bevorzugt sind Alkalithiocyanate, speziell Natrium-Thiocyanat bzw. NaSCN.

Es kann weiter vorteilhaft sein, wenn das Verfahren weiter einen Schritt (iii) zur Zugabe eines Verdickungmittels, insbesondere ausgewählt aus der Gruppe bestehend aus Celluloseether, Polysacharide, Stärkederivate, Polyvinylalkohole, Polyacrylate, Latex, Guarkernmehl, Alginate und Polyacrylamide, aufweist. Insbesondere handelt es sich bei dem Verdickungmittel um Polyacrylate.

Weiter kann eine Zugabe von einem Dispergiermittel ausgewählt aus der Gruppe bestehend aus Polycarboxylate, Melamin-Formaldehyd-Kondensate, Naphthalin-Formaldehyd-Kondensate, Ligninsulfonate und Polyoxyalkylene vorteilhaft sein. Vorzugsweise beträgt das Mischverhältnis in Gewichts-% von Dispergiermittel : Silica-Sol **SL** = 0.01 - 30, vorzugsweise 1 - 10, insbesondere bevorzugt 1.5 - 5.0

Es kann jedoch aber auch vorteilhaft sein, wenn keine der vorgenannten Dispergiermittel zugegeben werden.

Typischerweise wird Schritt (i) bei einer Temperatur von -10 - 90 °C und/oder einem Druck von 0.8 - 20 bar durchgeführt. Es kann unter Umständen auch zweckmässig sein, Schritt (i) unter Inertgasatmosphäre, z.B. N₂-Atmosphäre, durchzuführen, um unerwünschte Nebenreaktionen mit reaktiven Luftbestandteilen zu reduzieren.

Es ist insbesondere für die aus dem Beschleuniger resultierende Frühfestigkeit vorteilhaft, wenn das Verfahren weiter einen Schritt (iv) des Zerkleinerns des Umsetzungsproduktes aus Schritt (i) aufweist. Insbesondere handelt es sich bei dem Schritt (iv) um Zerkleinern durch Rührwerksmühlen, Walzenstühlen, Kolloidmühlen, Rotor-Stator-Mischer und/oder Homogenisatoren, vorzugsweise durch Rotor-Stator-Mischer und/oder Homogenisatoren.

Vorzugsweise führt der der Schritt (iv) zu einer durchschnittlichen Partikelgrösse des Reaktionsprodukts von 1000 - 10, vorzugsweise 100 - 10 nm. Dies ist insbesondere für die aus dem Beschleuniger resultierende Frühfestigkeit vorteilhaft.

In einem weiteren Aspekt betrifft die vorliegende Erfindung einen Abbinde- und Erhärtungsbeschleuniger hergestellt nach einem der vorgehend genannten Verfahren, wobei das molare Verhältnis Si:Ca des Abbinde- und Erhärtungsbeschleunigers im Bereich von 0.03-0.06 liegt. Vorzugsweise liegt der Abbinde- und Erhärtungsbeschleuniger als Feststoff, z.B. als Pulver, oder als Flüssigkeit vor. Insbesondere liegt der Beschleuniger als Kolloid, Suspension oder als wässrige Lösung vor.

Besonders bevorzugt liegt der Beschleuniger als Suspension vor. Die Suspension weist bevorzugt einen Feststoffanteil von 5 - 70 Gew.-%, insbesondere 20 - 65 Gew.-%, speziell 40 - 60 Gew.-%, auf.

Mit Vorteil liegt ein pH-Wert nach erfolgter Herstellung des Abbinde- und Erhärtungsbeschleunigers im Bereich < 7, insbesondere < 6, bevorzugt < 5 oder < 4.5.

Insbesondere liegt der pH im Bereich von 2 - 12, insbesondere 2 - 8, bevorzugt 2.5 - 7, speziell 3 - 6.5, besonders bevorzugt 3 - 5 oder 3 - 4.5. Derartige Beschleuniger haben sich im Hinblick auf Druckfestigkeitssteigerung, Verarbeitbarkeit und Lagerstabilität als optimal erwiesen.

Bevorzugt ist der Abbinde- und Erhärtungsbeschleuniger als solcher im Wesentlichen frei von hydraulischen und/oder zementösen Bindemitteln und/oder Zement. Dies bedeutet insbesondere, dass ein Anteil deratiger Stoffe < 10 Gew.-%, bevorzugt < 5 Gew.-%, speziell < 1 Gew.-%, besonders bevorzugt < 0.5 Gew.-% oder < 0.1 Gew.-% ist.

Der erfindungsgemässe Abbinde- und Erhärtungsbeschleuniger findet in unterschiedlichen Bereichen Anwendung, insbesondere in der Beton- und Zementtechnologie. Der Beschleuniger verfügt über besonders gute Eigenschaft als Beschleuniger für Zusammensetzungen auf Basis von mineralischen Bindemitteln, das heisst, dass er zur Beschleunigung des Abbindens und Erhärtens von mineralischen Bindemitteln, insbesondere hydraulischen Bindemitteln, speziell von Schnellzement, sowie daraus hergestelltem Mörtel oder Beton, verwendet werden kann. Zudem kann mit dem erfindungsgemässen Beschleuniger Mörtel oder Beton hergestellt werden, welcher eine hohe Früh- sowie Endfestigkeit aufweist. Der erfindungsgemässe Abbinde- und Erhärtungsbeschleuniger ist somit besonders geeignet, wenn die Zusammensetzungen auf Basis von mineralischen Bindemitteln sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten, damit die Fertigteile bereits nach wenigen Stunden entschalt, transportiert, gestapelt oder vorgespannt werden können oder die Fahrbahnen oder Pisten befahren werden können.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung ist gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd-Kondensate, sulfonierte Melamin-Formaldehyd-Kondensate, Vinylcopolymere oder Polycarboxylatether, Beschleuniger, Korrosionsinhibitoren, Verzögerer, Schwindreduzierer, Entschäumer oder Porenbildner möglich.

Der erfindungsgemässe Beschleuniger kann zur erfindungsgemässen Verwendung sowohl in flüssiger als auch in fester Form, sowohl allein oder als Bestandteil eines Zusatzmittels verwendet werden. Die Erfindung betrifft daher zusätzlich ein Zusatzmittel in flüssiger oder fester Form umfassend mindestens einen erfindungsgemässen Beschleuniger.

Um die Verarbeitbarkeit zu verbessern und die Verarbeitungszeit nach Zugabe des erfindungsgemässen Beschleunigers zu einem mineralischen Bindemittel zu verlängern, enthält das Zusatzmittel zusätzlich zum Beschleuniger bevorzugt einen Verflüssiger. Als Verflüssiger kommen beispielsweise Lignosulfonate, sulfonierte Naphthalin-Formaldehyd-Kondensate, sulfonierte Melamin-Formaldehyd-Kondensate, Vinylcopolymere oder Polycarboxylatverflüssiger, wie sie beispielsweise in der Betonchemie als Hochleistungsverflüssiger bekannt sind, oder Mischungen davon, in Frage.

Der Beschleuniger oder das Zusatzmittel enthaltend den Beschleuniger kann auch weitere Bestandteile enthalten. Beispiele für weitere Bestandteile sind Lösungsmittel, insbesondere Wasser, oder Additive, wie weitere beschleunigende Substanzen wie beispielsweise Thiocyanate, Nitrate, Alkanolamine, Aluminiumsalze, Säuren oder deren Salze. Speziell bevorzugt sind die vorstehend genannten weiteren beschleunigenden Substanzen. Ebenfalls können im Beschleuniger beispielsweise Verzögerer, Schwindreduzierer, Entschäumer oder Schaumbildner vorhanden sein.

Der erfindungsgemässe Beschleuniger oder das Zusatzmittel enthaltend den Beschleuniger können auch in festem Aggregatzustand vorliegen, beispielsweise als Pulver, Schuppen, Pellets, Granulate oder Platten und lassen sich in dieser Form problemlos transportieren und lagern.

Der erfindungsgemässe Beschleuniger kann beispielsweise im festen Aggregatzustand vorliegen und mit einem Verflüssiger, welcher ebenfalls im festen Aggregatzustand vorliegt, vermischt werden und so über längere Zeit gelagert oder transportiert werden.

Der erfindungsgemässe Beschleuniger oder das Zusatzmittel enthaltend den Beschleuniger können im festem Aggregatzustand auch Bestandteil einer Zementzusammensetzung, einer sogenannten Trockenmischung, sein, die über längere Zeit lagerfähig ist und typischerweise in Säcken abgepackt oder in Silos gelagert wird und zum Einsatz kommt.

Der erfindungsgemässe Beschleuniger oder das Zusatzmittel enthaltend den Beschleuniger können auch einer üblichen Betonzusammensetzung mit oder kurz vor oder kurz nach der Zugabe des Wassers beigegeben werden. Als besonders geeignet gezeigt hat sich hierbei die Zugabe des erfindungsgemässen Beschleuniger in Form einer wässrigen Lösung oder Dispersion, insbesondere als Anmachwasser oder als Teil des Anmachwassers oder als Teil eines flüssigen Zusatzmittels, welches mit dem Anmachwasser zum hydraulischen Bindemittel gegeben wird.

Der erfindungsgemässe Beschleuniger oder das Zusatzmittel kann in flüssiger Form auch vor, während oder nach dem Mahlen des mineralischen Bindemittels auf das Bindemittel, den Beton, Mörtel, sowie Zusatzstoffe zugegeben oder aufgesprüht werden. Beispielsweise kann das mineralische Bindemittel teilweise mit dem Beschleuniger oder dem Zusatzmittel enthaltend den Beschleuniger beschichtet werden. Dies ermöglicht die Herstellung eines Bindemittels, insbesondere Zement oder latent hydraulische Schlacke, welche bereits den Beschleuniger oder das Zusatzmittel enthaltend den Beschleuniger enthält und so als Fertigmischung, beispielsweise als sogenannter Schnellzement, gelagert und verkauft werden kann. Dieser Zement weist nach Zugabe des Anmachwassers die gewünschten Eigenschaften des schnellen Abbindens und der hohen Frühfestigkeit auf, ohne dass zusätzlich zum Anmachwasser auf der Baustelle ein weiteres Zusatzmittel zugefügt werden muss.

In einem weiteren Aspekt betrifft die vorliegende Erfindung ein Bindemittel enthaltendes Gemisch umfassend mindestens ein mineralisches abbindendes Bindemittel und mindestens einen erfindungsgemässen Abbinde- und Erhärtungsbeschleuniger. Als Bindemittel kommen beispielsweise Zement, insbesondere Portlandzemente oder Tonerdeschmelzzemente und respektive deren Mischungen mit Flugaschen, Silica fume, Schlacke, Hüttensande, Gips und Kalksteinfiller oder gebrannter Kalk, ein latent hydraulisches Pulver oder inertes mikroskopisches Pulver in Frage. Als Bindemittel enthaltende Gemische kommen vorzugsweise Betonzusammensetzungen in Frage.

Weiterhin kann das Gemisch weitere Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd-Kondensate, sulfonierte Melamin-Formaldehyd-Kondensate oder Polycarboxylatether (PCE), Beschleuniger, Korrosionsinhibitoren, Verzögerer, Schwindreduzierer, Entschäumer oder Schaumbildner enthalten.

Vorzugsweise enthält das Bindemittel enthaltende Gemisch zusätzlich zum Beschleuniger mindestens einen Verflüssiger, vorzugsweise einen Verflüssiger auf Polycarboxylatether-Basis (PCE).

Der erfindungsgemässe Beschleuniger wird bevorzugt in einer Menge von 0.01 bis 30 Gew.-%, vorzugsweise 0.1 bis 10 Gew.-%, bezogen auf das Gewicht des Bindemittels verwendet, um die gewünschte Wirkung zu erzielen. Es können auch mehrere Beschleuniger gemischt verwendet werden, um die gewünschte Wirkung zu erzielen.

In einem weiteren Aspekt betrifft die vorliegende Erfindung ein Verfahren zur Herstellung eines Bindemittels enthaltenden Gemisches wobei der mindestens eine erfindungsgemässe Beschleuniger getrennt oder als Zusatzmittel vorgemischt in fester oder flüssiger Form dem Bindemittel zugegeben wird.

In einem weiteren Aspekt betrifft die vorliegende Erfindung die Verwendung eines wie vorstehend beschriebenen Beschleunigers zur Beschleunigung des Abbindens und Erhärtens eines mineralischen Bindemittels. Das mineralische Bindemittel ist insbesondere ein wie vorstehend beschriebenes Bindemittel, bevorzugt ein hydraulisches Bindemittel.

Der Abbinde- und Erhärtungsbeschleuniger wird dabei insbesondere in einer Menge von 0.01 bis 30 Gew.-%, vorzugsweise 0.2 bis 20 Gew.-%, insbesondere bevorzugt 0.1 bis 10 Gew.-%, bezogen auf das Gewicht des mineralischen Bindemittels, zugegeben.

Mit der vorliegenden Erfindung wird ein lagerstabiles Zusatzmittel für mineralische Bindemittel sowie ein Verfahren zu dessen Herstellung bereitgestellt, welches den Abbinde- und Erhärtungsprozess der hydraulischen Bindemittel beschleunigt ohne sich negativ auf die Verarbeitungszeiten, die Festigkeitsentwicklung oder die Dauerhaftigkeit der damit hergestellten Mörtel- oder Betonzusammensetzungen auszuwirken. Das erfindungsgemässe Zusatzmittel und insbesondere der erfindungsgemässe Abbinde- und Erhärtungsbeschleuniger ist somit besonders geeignet, wenn eine mineralische Bindemittelzusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten. Dadurch können die Fertigteile bereits nach wenigen Stunden entschalt, transportiert, gestapelt oder vorgespannt werden oder die Fahrbahnen oder Pisten befahren werden.

### Ausführungsbeispiele

### Eingesetzte Rohstoffe

**Tabelle 1: Charakterisierung der verwendeten Rohstoffe und deren Bezeichnung.**

| | | |
|---|---|---|
| ***CV1*** | Ca(NO₃)₂ × 4 H₂O | Yara GmbH&Co, Deutschland |
| ***CV2*** | Ca(NO₃)₂, 50 Gew.-% in H₂O | Yara GmbH&Co, Deutschland |
| ***SL*** | Cembinder 110, Partikelgrösse 2.5 nm, pH 6, kolloidal gelöste Polykieselsäure-Moleküle mit 7.2 Gew.-% SiO₂ Gehalt | AkzoNobel, Schweden |
| ***SL2*** | Cembinder 2509, Partikelgrösse 5 nm, pH 10.5, kolloidal gelöste Polykieselsäure-Moleküle mit 15.4 Gew.-% SiO₂ Gehalt | AkzoNobel, Schweden |
| ***GK*** | Gefällte Kieselsäure, Sipernat 500, Partikelgrösse 6 µm, pH 6, Wassergehalt ≤ 3 % | Evonik Degussa Deutschland |
| ***PK*** | Pyrogene Kieselsäure, Aerosil-380, Partikelgrösse 7 nm, pH (4% Dispersion) 4.2, Wassergehalt ≤ 2 % | Evonik Degussa Deutschland |
| ***MDEA*** | N-Methyldiethanolamin, Erhärtungsbeschleuniger | BASF, Schweiz |
| ***AS*** | Ameisensäure, 85 Gew.-% in H₂O | BASF, Schweiz |
| ***NaSCN*** | Natriumrhodanid | CEDA, China |

### Herstellungsverfahren Beschleuniger

Es wurden erfindungsgemässe Beschleuniger sowie Vergleichsverbindungen nach den nachstehend beschrieben Verfahren hergestellt, wobei die verwendeten Rohstoffe gemäss Tabelle 1 entsprechend den in Tabelle 2 beschriebenen Verhältnissen eingesetzt wurden.

Die in der Tabelle 2 beschriebenen Mengen an Calciumverbindung **(*CV1*** bzw. ***CV2*)** wurde in Wasser gelöst in einem 2 Liter Becher vorgelegt. Danach wurde die angegebene Menge Siliziumverbindung bzw. Silica-Sol **(SL** *bzw.* ***SL2*)** innerhalb 15 Minuten zugegeben und der pH-Wert mit Ameisensäure auf einen Wert von 3.8 eingestellt. Der Anteil an Wasser betrug ca. 45 Gew.-%. Sämtliche Gewichtsangaben beziehen sich jeweils auf das Gesamtgewicht des Beschleunigers. Der Inhalt des 2 Liter Bechers wurde unter Verwendung eines Flügelrührers (RW 20.n, Ika Labortechnik) mit Flügelrührerdurchmesser 5 cm, mit 500 bis 1'000 Umdrehungen pro Minute während der Zugabe des Silca-Sols sowie für weitere 5 min gerührt.

Der pH während der Umsetzung lag durchwegs im Bereich von 3.8 - 3.9.

Im Falle der Beschleuniger ***B7*** und ***B9*** - ***B12*** wurden, nebst der Calciumverbindung und dem Silka-Sol, zusätzlich die Substanzen wie sie in Tabelle 2 angegeben sind, zugegeben.

Die Beschleuniger ***B1* - *B6*** wurden zu Vergleichszwecken hergestellt und sind nicht erfindungsgemäss.

Die Lagerstabilität der Beschleuniger wurde optisch beurteilt. Die Beschleuniger werden so lange als lagerstabil bezeichnet als diese in Form von klaren Lösungen vorliegen und keine Ausfällungen zu erkennen sind. Mit dem ersten Auftreten von klar erkennbaren Ausfällungen und Trübungen endet die als stabil bezeichnete Phase. Beschleuniger mit einer Lagerstabilität < 24 h werden vorliegend als "nicht stabil" und solche mit einer Lagerstabilität > 3 Monate als "stabil" bezeichnet.

**Tabelle 2: Hergestellte Beschleuniger**

| Nr. | **CV,** Gew.-%* | SiO₂-Quelle, Gew.-%* | Zusätze, Gew.-%* | Molverhältnis Si : Ca | Stabilität |
|---|---|---|---|---|---|
| B1 | CV1, 50.5 | GK, 2.7 | - | 0.31 | stabil |
| B2 | CV1, 50.5 | PK, 2.7 | - | 0.31 | stabil |
| B3 | CV2, 27.1 | SL, 49.7 | - | 0.721 | nicht stabil |
| B4 | CV2, 60.0 | SL, 75.5 | - | 0.495 | stabil |
| B5 | CV2, 18.6 | SL, 15.5 | - | 0.328 | stabil |
| B6 | CV2, 66.4 | SL, 34.6 | MDEA, 6.0 | 0.205 | stabil |
| B7 | CV2, 67.0 | SL, 10.1 | NaSCN, 10 MDEA 6.5 | 0.059 | stabil |
| B8 | CV2, 70.8 | SL2, 4.9 | - | 0.058 | stabil |
| B9 | CV2, 70.8 | SL2, 4.9 | MDEA, 6.5 | 0.058 | stabil |
| B10 | CV2, 70.8 | SL2, 4.9 | NaSCN, 6.5 | 0.058 | stabil |
| B11 | CV2, 70.8 | SL2, 4.9 | NaSCN, 10 MDEA 6.5 | 0.058 | stabil |
| B12 | CV2, 72 | SL, 5 | NaSCN, 10 MDEA 6.5 | 0.027 | stabil |

| | | | | | |
|---|---|---|---|---|---|
| * = bezogen auf das Gesamtgewicht des jeweiligen Beschleunigers | | | | | |

### Mörteltests

Zur Bestimmung der Wirksamkeit der der Beschleuniger ***B1*** - ***B12*** wurde die nachfolgend beschriebene Mörtelmischung **MM** (Tabelle 3) mit den verschiedenen Beschleunigern der Tabelle 2 versetzt.

**Tabelle 3: Trockenzusammensetzung der Mörtelmischung**

| Zusammensetzung der Mörtelmischung **(MM):** (Grösstkorn 8mm) | Menge in g |
|---|---|
| Portlandzement (SVW CEM I 42.5N) | 750 |
| Kalksteinfiller | 141 |
| Sand 0-1 mm | 738 |
| Sand 1-4 mm | 1107 |
| Sand 4-8 mm | 1154 |

Als Zement wurde SVW (schweizer Zementsorten Siggenthal, Vigier, Wildegg, 1:1:1 Gemisch) CEM I 42.5N verwendet, welcher eine Feinheit nach Blaine von ca. 3'400 cm²/g hat.

Zum Anmachen von Mörtelzusammensetzungen ***MZ*** wurden die Sande, der Filler und der Zement der Mörtelmischung ***MM*** 1 Minute lang in einem Hobart-Mischer trocken gemischt. Innerhalb von 10 Sekunden wurde das Anmachwasser, in dem der jeweilige Beschleuniger (0.71 Gew.-%, bezogen auf das Gesamtgewicht des Mörtelzusammensetzung inklusive Anmachwasser) gelöst oder dispergiert war, zugegeben und noch weitere 170 Sekunden gemischt. Die Gesamt-Mischzeit nass war 3 Minuten. Der Wasser/Zement-Wert (w/z-Wert) betrug durchwegs 0.4.

Allen Mörtelzusammensetzungen wurden zusätzlich noch 1 Gew.-% (auf das Zementgewicht) eines Verflüssigers (Sika ViscoCrete 3081S, erhältlich bei Sika Schweiz AG, Schweiz) zugegeben, um die Verarbeitbarkeit der Mörtelzusammensetzungen zu verbessern.

Eine Minute nach dem Anmachen der Mörtelzusammensetzungen wurde das jeweilige Ausbreitmass (ABM) gemessen. Die Frühdruckfestigkeit der Mörtelmischungen wurde 8 Stunden nach dem Anmachen der Mörtelmischungen bestimmt.

Die Prüfung zur Bestimmung der Druckfestigkeit (in N/mm²) erfolgte an Prismen (40 x 40 x 160mm) gemäss Norm EN 12390-1 bis 12390-4. Das Ausbreitmass (ABM) des Mörtels wurde gemäss EN 1015-3 bestimmt.

Die Resultate der Mörteltests sind in Tabelle 4 zusammengefasst. Der besseren Übersichtlichkeit halber wurden das Molverhältnis und die Stabilität der jeweiligen Beschleuniger in Tabelle 4 nochmals aufgeführt. ***MR*** ist eine Referenzprobe, welche in analoger Weise wie die übrigen Mörtelzusammensetzungen aber ohne Zugabe eines Beschleunigers hergestellt wurde.

**Tabelle 4: Resultate Mörteltest**

| Nr. | Beschleuniger | Molverhältnis Si: Ca des Beschleunigers | Stabilität Beschleuniger | ABM (in %) nach 1 min vergl. mit MR | Druckfestigkeit (in %) nach 8 h vergl. mit *MR* |
|---|---|---|---|---|---|
| ***MR*** | - | - | - | 100 | 100 |
| ***MZ1*** | B1 | 0.31 | stabil | 105 | 156 |
| ***MZ2*** | B2 | 0.31 | stabil | 109 | 161 |
| ***MZ3*** | B3 | 0.721 | nicht stabil | 62 | 333 |
| ***MZ4*** | B4 | 0.495 | stabil | 59 | 356 |
| ***MZ5*** | B5 | 0.328 | stabil | 77 | 322 |
| ***MZ6*** | B6 | 0.205 | stabil | 72 | 467 |
| ***MZ7*** | B7 | 0.059 | stabil | 90 | 466 |
| ***MZ8*** | B8 | 0.058 | stabil | 103 | 488 |
| ***MZ9*** | B9 | 0.058 | stabil | 95 | 492 |
| ***MZ10*** | B10 | 0.058 | stabil | 94 | 490 |
| ***MZ11*** | B11 | 0.058 | stabil | 105 | 500 |
| ***MZ12*** | B12 | 0.027 | stabil | 100 | 489 |

Aus Tabelle 4 ist insbesondere ersichtlich, dass die Beschleuniger ***B3*** - ***B6*** auf Basis von die Silica-Sol mit einem Molverhältnis Si : Ca von über 0.1 zwar teilweise stabil sind, sich jedoch stark negativ auf die Verarbeitbarkeit bzw. das Ausbreitmass (ABM) auswirken (siehe ***MZ4*** - ***MZ6***). Hingegen sind die erfindungsgemässen Beschleuniger ***B7- B12*** mit einem Molverhältnis Si : Ca im Bereich von 0.03-0.06 zugleich stabil, ergeben eine gute Verarbeitbarkeit (das ABM beträgt mindestens 90% des Vergleichsversuchs ***MR***) und bewirken eine sehr hohe Druckfestigkeitssteigerung (Steigerung wenigstens 466 % gegenüber der Referenzprobe ***MR***).

Durch die Zugabe von weiteren erhärtungsbeschleunigenden Substanzen (NaSCN bzw. MDEA) kann die Druckfestigkeitssteigerung weiter verbessert werden (vgl. ***MZ9 - MZ11*** im Vergleich mit ***MZ8***). Dies insbesondere bei einer Kombination von zwei zusätzlichen erhärtungsbeschleunigenden Substanzen **(*MZ11*)***,* welche überraschenderweise eine signifikante Verbesserung der Druckfestigkeit als auch eine besonders vorteilhafte Verarbeitbarkeit mit sich bringt.

Die Resultate belegen, dass die erfindungsgemäss hergestellten Beschleuniger eine gute Lagerstabilität aufweisen und zugleich sehr hohe Druckfestigkeitssteigerungen als auch gute Verarbeitungseigenschaften von mineralischen Bindemittelzusammensetzungen ergeben.

## Patentansprüche

1. Verfahren zur Herstellung eines Abbinde- und Erhärtungsbeschleunigers für mineralische Bindemittel, insbesondere hydraulische Bindemittel, aufweisend einen Schritt:
(i) der Umsetzung einer Calciumverbindung **CV** mit Silica-Sol **SL,** wobei während der Umsetzung das molare Verhältnis von Si: Ca im Bereich von 0.03 - 0.06, liegt, und
wobei die Umsetzung der Calciumverbindung **CV** mit dem Silica-Sol **SL** in Schritt (i) in Gegenwart eines Lösungsmittels stattfindet.

2. Verfahren gemäss wenigstens einem der vorangehenden Ansprüche, **dadurch gekennzeichnet, dass** in Schritt (i) die Umsetzung der Calciumverbindung **CV** mit Silica-Sol **SL** in Gegenwart von Wasser, insbesondere in Wasser, stattfindet, wobei ein Anteil an Wasser bevorzugt 25 - 95 Gew,.%, insbesondere 30 - 60 Gew.-%, bezogen auf das Gewicht der gesamten Reaktionsmischung, beträgt.

3. Verfahren gemäss wenigstens einem der vorangehenden Ansprüche, **dadurch gekennzeichnet, dass** die Calciumverbindung **CV** und Silica-Sol **SL** getrennt voneinander dem Wasser zugegeben werden.

4. Verfahren gemäss wenigstens einem der vorangehenden Ansprüche, **dadurch gekennzeichnet, dass** die Calciumverbindung **CV** ausgewählt ist aus der Gruppe bestehend aus Calciumchlorid, Calciumnitrat, Calciumformiat, Calciumacetat, Calciumbicarbonat, Calciumbromid, Calciumcitrat, Calciumchlorat, Calciumhydroxid, Calciumoxid, Calciumhypochlorid, Calciumiodate, Calciumiodid, Calciumlactat, Calciumnitrit, Calciumphosphat, Calciumpropionat, Calciumsulphat, Calciumsulphat-hemihydrat, Calciumsulphate-dihydrat, Calciumsulphid, Calciumtartrat, Calciumgluconat, Calciumsulfamat, Calciumthiocyanat, Calciummaleinat, Calciumfumarat, Calciumadipat und Calciumaluminat, vorzugsweise ist die Calciumverbindung **CV** ausgewählt ist aus der Gruppe bestehend aus Calciumnitrat und Calciumsulfamat.

5. Verfahren gemäss Anspruch 4, **dadurch gekennzeichnet, dass** es sich bei der Calciumverbindung **CV** um Calciumnitrat handelt.

6. Verfahren gemäss wenigstens einem der vorangehenden Ansprüche, **dadurch gekennzeichnet, dass** das Silica-Sol **SL** einen pH von 3 - 12, insbesondere von 7 - 12, besonders bevorzugt von 10 - 11, aufweist.

7. Verfahren gemäss wenigstens einem der vorangehenden Ansprüche, **dadurch gekennzeichnet, dass** es sich bei dem Silica-Sol **SL** um ein Silica-Sol mit einem durchschnittlichen Partikeldurchmesser von 1 - 150 nm, insbesondere von 1 - 50 nm, bevorzugt 1.2 - 25 nm, im Speziellen 1.3 - 20 nm, ganz besonders bevorzugt 2 - 9 nm, handelt.

8. Verfahren gemäss wenigstens einem der vorangehenden Ansprüche, **dadurch gekennzeichnet, dass**
a) es sich bei der Calciumverbindung **CV** um Calciumnitrat handelt und
b) das Silica-Sol **SL** einen durchschnittlichen Partikeldurchmesser von 2 - 9 nm aufweist und
c) im Verlauf der Umsetzung von Schritt (i) das molare Verhältnis von Si : Ca im Bereich von 0.01 - 0.08 liegt und
d) die Umsetzung der Calciumverbindung **CV** mit Silica-Sol **SL** in Gegenwart von Wasser bei einem pH von 3 - 6.5 erfolgt.

9. Verfahren gemäss wenigstens einem der vorhergehenden Ansprüche, **dadurch gekennzeichnet, dass** wenigstens eine weitere Erhärtungsbeschleunigende Substanz zugegeben wird, wobei bevorzugt die wenigstens eine weitere Erhärtungsbeschleunigende Substanz ein oder mehrere Aminoalkohole, ein oder mehrere α-Hydroxycarbonsäuren, ein oder mehrere Alkali- und/oder Erdalkalithiocyanate, ein oder mehrere Alkali- und/oder Erdalkalihalogenide, Glyzerin und/oder Glyzerinderivate, umfasst.

10. Verfahren gemäss Anspruch 9, **dadurch gekennzeichnet, dass** eine weitere erhärtungsbeschleunigende Substanz einen Aminoalkohol, insbesondere N-Methyldiethanolamin, und/oder ein oder mehrere Alkali- und/oder Erdalkalithiocyanate, insbesondere NaSCN, umfasst.

11. Verfahren gemäss wenigstens einem der Ansprüche 9 - 10, **dadurch gekennzeichnet, dass** die wenigstens eine weitere erhärtungsbeschleunigende Substanz einen Anteil von 1 - 20 Gew.-%, vorzugsweise 2 - 11 Gew.-%, insbesondere bevorzugt 4 - 10 Gew.-%, bezogen auf das Gesamtgewicht des Abbinde- und Erhärtungsbeschleunigers, aufweist.

12. Abbinde- und Erhärtungsbeschleuniger hergestellt nach einem Verfahren gemäss einem der Ansprüche 1 - 11, **dadurch gekennzeichnet dass** das molare Verhältnis Si : Ca des Abbinde- und Erhärtungsbeschleunigers im Bereich von 0.03-0.06 liegt.

13. Bindemittel enthaltendes Gemisch umfassend mindestens ein mineralisches Bindemittel, insbesondere ein hydraulisch abbindendes Bindemittel, und mindestens einen Abbinde- und Erhärtungsbeschleuniger gemäss Anspruch 12.

14. Verwendung eines Abbinde- und Erhärtungsbeschleunigers nach Anspruch 12 oder eines Abbinde- und Erhärtungsbeschleunigers wie er erhältlich ist aus einem Verfahren gemäss einem der Ansprüche 1 - 11, zur Beschleunigung des Abbindens und Erhärtens eines mineralischen Bindemittels.

## Claims

1. Process for the production of a setting and hardening accelerator for mineral binders, in particular hydraulic binders, comprising the following step:
(i) reaction of a calcium compound **CV** with silica sol **SL,** where during the reaction the molar Si:Ca ratio is in the range from 0.03 to 0.06, and
where the reaction of the calcium compound CV with the silica sol SL in step (i) takes place in the presence of a solvent.

2. Process according to at least one of the preceding claims, **characterized in that** in step (i) the reaction of the calcium compound **CV** with silica sol **SL** takes place in the presence of water, in particular in water, with a proportion of water that is preferably from 25 to 95% by weight, in particular from 30 to 60% by weight, based on the weight of the entire reaction mixture.

3. Process according to at least one of the preceding claims, **characterized in that** the calcium compound **CV** and silica sol **SL** are added separately from one another to the water.

4. Process according to at least one of the preceding claims, **characterized in that** the calcium compound **CV** is selected from the group consisting of calcium chloride, calcium nitrate, calcium formate, calcium acetate, calcium bicarbonate, calcium bromide, calcium citrate, calcium chlorate, calcium hydroxide, calcium oxide, calcium hypochloride, calcium iodate, calcium iodide, calcium lactate, calcium nitrite, calcium phosphate, calcium propionate, calcium sulfate, calcium sulfate hemihydrate, calcium sulfate dihydrate, calcium sulfide, calcium tartrate, calcium gluconate, calcium sulfamate, calcium thiocyanate, calcium maleate, calcium fumarate, calcium adipate, and calcium aluminate, and the calcium compound **CV** is preferably selected from the group consisting of calcium nitrate and calcium sulfamate.

5. Process according to Claim 4, **characterized in that** the calcium compound **CV** is calcium nitrate.

6. Process according to at least one of the preceding claims, **characterized in that** the pH of the silica sol **SL** is from 3 to 12, in particular from 7 to 12, particularly preferably from 10 to 11.

7. Process according to at least one of the preceding claims, **characterized in that** the silica sol **SL** is a silica sol with average particle diameter from 1 to 150 nm, in particular from 1 to 50 nm, preferably from 1.2 to 25 nm, specifically from 1.3 to 20 nm, very particularly preferably from 2 to 9 nm.

8. Process according to at least one of the preceding claims, **characterized in that**
a) the calcium compound **CV** is calcium nitrate, and
b) the average particle diameter of the silica sol **SL** is from 2 to 9 nm, and
c) during the course of the reaction of step (i) the molar Si : Ca ratio is in the range from 0.01 to 0.08, and
d) the reaction of the calcium compound **CV** with silica sol **SL** takes place in the presence of water at pH from 3 to 6.5.

9. Process according to at least one of the preceding claims, **characterized in that** at least one other hardening-accelerator substance is added, wherein the at least one other hardening-accelerator substance preferably comprises one or more aminoalcohols, one or more α-hydroxycarboxylic acids, one or more alkali metal and/or alkaline earth metal thiocyanates, one or more alkali metal and/or alkaline earth metal halides, glycerol, and/or glycerol derivatives.

10. Process according to Claim 9, **characterized in that** another hardening-accelerator substance comprises an aminoalcohol, in particular N-methyldiethanolamine, and/or one or more alkali metal and/or alkaline earth metal thiocyanates, in particular NaSCN.

11. Process according to at least one of Claims 9 to 10, **characterized in that** the proportion of the at least one other hardening-accelerator substance is from 1 to 20% by weight, preferably from 2 to 11% by weight, with particular preference from 4 to 10% by weight, based on the total weight of the setting and hardening accelerator.

12. Setting and hardening accelerator produced by a process according to any of Claims 1 to 11, **characterized in that** the molar Si:Ca ratio of the setting and hardening accelerator is in the range from 0.03 to 0.06.

13. Binder-containing mixture comprising at least one mineral binder, in particular one hydraulically setting binder, and at least one setting and hardening accelerator according to Claim 12.

14. Use of a setting and hardening accelerator according to Claim 12 or of a setting and hardening accelerator obtainable from a process according to any of Claims 1 to 11, for accelerating the setting and hardening of a mineral binder.

## Revendications

1. Procédé de fabrication d'un accélérateur de prise et de durcissement pour liants minéraux, notamment liants hydrauliques, comprenant une étape :
(i) la mise en réaction d'un composé de calcium **CV** avec un sol de silice **SL,** le rapport molaire Si:Ca pendant la réaction se situant dans la plage allant de 0,03 à 0,06, et
la réaction du composé de calcium **CV** avec le sol de silice **SL** à l'étape (i) ayant lieu en présence d'un solvant.

2. Procédé selon au moins l'une quelconque des revendications précédentes, **caractérisé en ce qu'**à l'étape (i), la réaction du composé de calcium **CV** avec le sol de silice **SL** a lieu en présence d'eau, notamment dans de l'eau, une proportion de l'eau étant de préférence de 25 à 95 % en poids, notamment de 30 à 60 % en poids, par rapport au poids du mélange réactionnel total.

3. Procédé selon au moins l'une quelconque des revendications précédentes, **caractérisé en ce que** le composé de calcium **CV** et le sol de silice **SL** sont ajoutés séparément l'un de l'autre à l'eau.

4. Procédé selon au moins l'une quelconque des revendications précédentes, **caractérisé en ce que** le composé de calcium **CV** est choisi dans le groupe constitué par le chlorure de calcium, le nitrate de calcium, le formiate de calcium, l'acétate de calcium, le bicarbonate de calcium, le bromure de calcium, le citrate de calcium, le chlorate de calcium, l'hydroxyde de calcium, l'oxyde de calcium, l'hypochlorure de calcium, l'iodate de calcium, l'iodure de calcium, le lactate de calcium, le nitrite de calcium, le phosphate de calcium, le propionate de calcium, le sulfate de calcium, l'hémihydrate de sulfate de calcium, le dihydrate de sulfate de calcium, le sulfure de calcium, le tartrate de calcium, le gluconate de calcium, le sulfamate de calcium, le thiocyanate de calcium, le maléinate de calcium, le fumarate de calcium, l'adipate de calcium et l'aluminate de calcium, le composé de calcium **CV** étant de préférence choisi dans le groupe constitué par le nitrate de calcium et le sulfamate de calcium.

5. Procédé selon la revendication 4, **caractérisé en ce que** le composé de calcium **CV** est le nitrate de calcium.

6. Procédé selon au moins l'une quelconque des revendications précédentes, **caractérisé en ce que** le sol de silice **SL** présente un pH de 3 à 12, notamment de 7 à 12, de manière particulièrement préférée de 10 à 11.

7. Procédé selon au moins l'une quelconque des revendications précédentes, **caractérisé en ce que** le sol de silice **SL** est un sol de silice ayant un diamètre de particule moyen de 1 à 150 nm, notamment de 1 à 50 nm, de préférence de 1,2 à 25 nm, en particulier de 1,3 à 20 nm, de manière tout particulièrement préférée de 2 à 9 nm.

8. Procédé selon au moins l'une quelconque des revendications précédentes, **caractérisé en ce que**
a) le composé de calcium **CV** est le nitrate de calcium, et
b) le sol de silice **SL** présente un diamètre de particule moyen de 2 à 9 nm, et
c) le rapport molaire Si:Ca se situe dans la plage allant de 0,01 à 0,08 au cours de la réaction de l'étape (i), et
d) la réaction du composé de calcium **CV** avec le sol de silice **SL** a lieu en présence d'eau à un pH de 3 à 6,5.

9. Procédé selon au moins l'une quelconque des revendications précédentes, **caractérisé en ce qu'**au moins une substance d'accélération du durcissement supplémentaire est ajoutée, ladite au moins une substance d'accélération du durcissement supplémentaire comprenant de préférence un ou plusieurs amino-alcools, un ou plusieurs acides α-hydroxycarboxyliques, un ou plusiurs thiocyanates alcalins et/ou alcalino-terreux, un ou plusieurs halogénures alcalins et/ou alcalino-terreux, de la glycérine et/ou des dérivés de glycérine.

10. Procédé selon la revendication 9, **caractérisé en ce qu'**une substance d'accélération du durcissement supplémentaire comprend un amino-alcool, notamment la N-méthyldiéthanolamine, et/ou un ou plusieurs thiocyanates alcalins et/ou alcalino-terreux, notamment NaSCN.

11. Procédé selon au moins l'une quelconque des revendications 9 à 10, **caractérisé en ce que** ladite au moins une substance d'accélération du durcissement supplémentaire présente une proportion de 1 à 20 % en poids, de préférence de 2 à 11 % en poids, de manière particulièrement préférée de 4 à 10 % en poids, par rapport au poids total de l'accélérateur de prise et de durcissement.

12. Accélérateur de prise et de durcissement fabriqué par un procédé selon l'une quelconque des revendications 1 à 11, **caractérisé en ce que** le rapport molaire Si:Ca de l'accélérateur de prise et de durcissement se situe dans la plage allant de 0,03 à 0,06.

13. Mélange contenant un liant, comprenant au moins un liant minéral, notamment un liant à prise hydraulique, et au moins un accélérateur de prise et de durcissement selon la revendication 12.

14. Utilisation d'un accélérateur de prise et de durcissement selon la revendication 12 ou d'un accélérateur de prise et de durcissement tel que pouvant être obtenu par un procédé selon l'une quelconque des revendications 1 à 11, pour l'accélération de la prise et du durcissement d'un liant minéral.
